# EUROPÄISCHE PATENTANMELDUNG

(11) **EP 0 732 359 A1**
(43) Veröffentlichungstag der Anmeldung: **18.09.1996**
(21) Anmeldenummer: 96103718.1
(22) Anmeldetag: 09.03.1996
(51) Int. Cl.: C08K 5/00, C08L 25/02, C08L 53/00

(54) **Flammgeschützte thermoplastische Formmassen**

(30) Priorität: 13.03.1995 DE 19508935
(71) Anmelder: BASF AKTIENGESELLSCHAFT, 67056 Ludwigshafen (DE)
(72) Erfinder: Knoll, Konrad, Dr., 67069 Ludwigshafen (DE); Loth, Wolfgang, Dr., 67098 Bad Dürkheim (DE); Gausepohl, Hermann, Dr., 67112 Mutterstadt (DE)

(57) **Zusammenfassung**

Flammgeschützte thermoplastische Formmassen, enthaltend als wesentliche Komponenten
A) 5 bis 99,5 Gew.%, bezogen auf das Gesatmgewicht der Formmasse, Copolymerisate aus den Monomeren der allgemeinen Formeln I und II 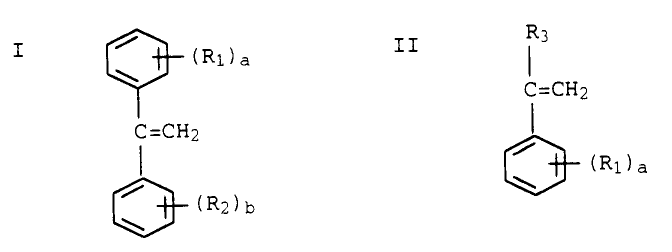 mit
   R₁ = H oder Alkylrest mit 1-22 C-Atomen
   R₂ = H oder Alkylrest mit 1-22 C-Atomen
   R₃ = H oder Alkylrest mit 1-4 C-Atomen
   a = 0, 1, 2, 3, 4 oder 5
   b = 0, 1, 2, 3, 4 oder 5
B) 0 bis 89,5 Gew.%, bezogen auf das Gesamtgewicht der Formmasse, weiteren von A) verschiedenen Polymeren, und
C) 0,5 - 20 Gew.-%, bezogen auf das Gesamtgewicht der Formmasse, eines Flammschutzmittels
D) 0 bis 50 Gew.%, bezogen auf das Gesamtgewicht der Formmasse, an weiteren Zusatzstoffen und Verarbeitungshilfsmitteln.

## Beschreibung

Die vorliegende Erfindung betrifft flammgeschützte thermoplastische Formmassen, enthaltend als wesentliche Komponenten,
A) 10 bis 99,5 Gew.% Copolymerisate aus den Monomeren der allgemeinen Formeln I und II 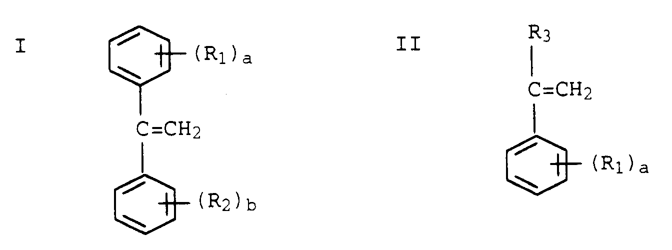 mit
   R₁ = H oder Alkylrest mit 1-22 C-Atomen
   R₂ = H oder Alkylrest mit 1-22 C-Atomen
   R₃ = H oder Alkylrest mit 1-4 C-Atomen
   a = 0, 1, 2, 3, 4 oder 5
   b = 0, 1, 2, 3, 4 oder 5
B) 0 bis 89,5 Gew.%, bezogen auf das Gesamtgewicht der Formmasse, weiteren von A) verschiedenen Polymeren, und
C) 0,5 bis 20 Gew.-%, bezogen auf das Gesamtgewicht der Formmasse, eines Flammschutzmittels
D) 0 bis 50 Gew.%, bezogen auf das Gesamtgewicht der Formmasse, an weiteren Zusatzstoffen und Verarbeitungshilfsmitteln.

Flammgeschützte thermoplastische Formmassen sind für eine Reihe von Anwendungen unverzichtbar und sind kommerziell in großem Umfang erhältlich. Flammgeschützte thermoplastische Formmassen auf der Basis von Styrolpolymerisaten haben im allgemeinen den Nachteil eines niedrigen Erweichungspunktes und sind deshalb nur bedingt dort anwendbar, wo die Wärmebeständigkeit ein wichtiges Kriterium ist, z. B. im Elektrosektor.

Um die Wärmeformbeständigkeit von Styrolpolymerisaten zu erhöhen, wurden Mischungen mit Polyphenylenethern (PPE) beschrieben (EP 496 119, DE 40 38 341, DE 4 128 350, US 5,206,276 und EP-A 523 790). Durch die gute Flammfestigkeit des PPE wird dadurch auch der Flammschutz gegenüber reinen Styrolpolymerisaten verbessert, doch verfärben sich die Mischungen leicht unter dem Einfluß von Licht.

Aufgabe der vorliegenden Erfindung war es daher, flammgeschützte thermoplastische Formmassen auf der Basis von Styrolpolymerisaten zur Verfügung zu stellen, die sowohl eine gute Lichtstabilität als auch eine hohe Wärmeformbeständigkeit aufweisen.

Diese Aufgabe wurde durch die flammgeschützen thermoplastischen Formmassen gemäß Anspruch 1 gelöst.

Als Komponente A enthalten die erfindungsgemäßen thermoplastischen Formmassen 5 bis 99,5 vorzugsweise 10 bis 99 und insbesondere 15 bis 90 Gew.-%, bezogen auf das Gesamtgewicht der Formmasse, eines Copolymeren mit Einheiten, die sich von den Monomeren I und II ableiten.

Bei den Monomeren der allgemeinen Formel I handelt es sich um 1,1-Diphenylethylen und dessen an den aromatischen Ringen ggf. mit Alkylgruppen mit bis zu 22 C-Atomen substituierten Derivaten. Bevorzugte Alkylgruppen als Substituenten sind Alkylgruppen mit 1 bis 4 C-Atomen wie Methyl-, Ethyl-, i- und n-Propyl und n-, i- oder tert. Butyl, um nur einige zu nennen. Besonders bevorzugt wird jedoch das unsubstituierte 1,1-Diphenylethylen selbst eingesetzt.

Die Monomeren der allgemeinen Formel II sind Styrol und dessen in α-Stellung oder am aromatischen Ring mit Alkylgruppen mit 1 bis 4 C-Atomen substituierte Derivate. Bevorzugte Alkylgruppen sind die vorstehend für Monomere der Formel I als bevorzugt genannten; unsubstituiertes Styrol selbst wird besonders bevorzugt.

Das molare Verhältnis der Einheiten, die sich von Monomeren I ableiten zu Einheiten, die sich von Monomeren II ableiten liegt im allgemeinen im Bereich von 1 : 1 bis 1 : 25, vorzugsweise von 1 : 1,05 bis 1 : 15 und besonders bevorzugt im Bereich von 1 : 1,1 bis 1 : 10. Da die Monomeren der Formel I in der Regel für sich allein nicht polymerisieren, sind Produkte mit molaren Verhältnissen von mehr als 1 : 1 nicht auf einfachem Wege zugänglich.

Nach einem bevorzugten Verfahren zur Herstellung der Komponente A) der erfindungsgemäßen Formmassen werden Monomere der Formel I vorgelegt und die Monomeren der Formel II während der Reaktion nach einem Gradientenverfahren derart zudosiert, daß mit zunehmender Reaktionsdauer die zugegebene Menge an Monomeren der Formel II pro Zeiteinheit im wesentlichen entsprechend der noch vorhandenen Menge an Monomeren der Formel I verringert wird. Durch diese Art der Umsetzung wird das Monomerverhältnis während der gesamten Polymerisation annähernd konstant gehalten. Zur Steuerung des Zulaufgradienten kann vorteilhafterweise die Anderung des Brechungsindexes, der eine Funktion des Monomerverhältnisses ist, ausgenutzt werden. Eine weitere Möglichkeit besteht darin, in einer Reihe von Vorversuchen das Monomerverhältnis als Funktion des Umsatzes zu bestimmen und so eine entsprechende Eichkurve zu erhalten.

Die Umsetzung der genannten Monomeren erfolgt vorteilhafterweise in einem inerten Lösungsmittel. Unter "inert" wird dabei verstanden, daß das Lösungsmittel nicht mit dem zur Initiierung der Reaktion üblicherweise verwendeten metallorganischen Initiator reagiert. Generell eignen sich daher sowohl aliphatische als auch aromatische Kohlenwasserstoffe. Geeignete Lösungsmittel sind beispielsweise Cyclohexan, Methylcyclohexan, Benzol, Toluol, Ethylbenzol oder Xylol.

Schließlich können auch Kohlenwasserstoffe verwendet werden, in denen das im Verlauf der Reaktion entstehende Copolymere nicht löslich ist. In diesem Fall kann man anstelle der Lösungspolymerisation eine Fällungspolymerisation oder unter Verwendung eines Dispergierhilfsmittels eine Dispersionspolymerisation durchführen. Als Reaktionsmedium für derartige Verfahrensvarianten eignen sich beispielsweise Butan, Pentan, n-Hexan, Isopentan, Heptan, Oktan und Isooktan.

Die Polymerisation wird im allgemeinen mittels metallorganischer Verbindungen initiiert, d.h. es handelt sich um eine anionische Polymerisation. Bevorzugt werden Verbindungen der Alkalimetalle, insbesondere des Lithiums. Beispiele für Initiatoren sind Methyllithium, Ethyllithium, Propyllithium, n-Butyllithium, sek. Butyllithium und tert. Butyllithium. Die metallorganische Verbindung wird in der Regel als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0,002 bis 5 Mol-%, wenn man sie auf die Monomeren bezieht.

Zur Erzielung höherer Polymerisationsgeschwindigkeiten können geringe Mengen polarer, aprotischer Lösungsmittel zugesetzt werden. Geeignet sind beispielsweise Diethylether, Diisopropylether, Diethylenglykoldimethylether, Diethylenglykol-dibutylether oder insbesondere Tetrahydrofuran. Das polare Cosolvens wird dem unpolaren Lösungsmittel bei dieser Verfahrensvariante in der Regel in einer geringen Menge von ca. 0,5 - 5 Vol-% zugesetzt. Besonders bevorzugt ist THF in einer Menge von 0,1 - 0,3 Vol-%. In reinem THF werden die Reaktionsparameter ungünstig beeinflußt, so daß das Polymere hohe Restanteile an Monomeren der Formel I enthält.

Die Polymerisationstemperatur kann zwischen 0° und 130°C liegen. Bevorzugt sind Temperaturen von 50° - 90°C. Im allgemeinen wird unter isothermen Bedingungen, d.h. unter Konstanthaltung der Polymerisationstemperatur polymerisiert. Man kann die Temperatur aber auch in dem Bereich von 0° - 130°C, vorzugsweise von 30° - 120°C ansteigen lassen. Besonders zweckmäßig ist es, zunächst isotherm zu polymerisieren und gegen Ende der Polymerisation, d.h. bei geringen Monomerkonzentrationen die Temperatur adiabatisch ansteigen zu lassen, um die Polymerisationszeiten kurz zu halten.

Die Reaktionszeiten liegen in der Regel im Bereich von 0,1 bis 24, vorzugsweise von 0,5 bis 12 und besonders bevorzugt von 1 bis 10 h.

Gemäß einer bevorzugten Ausführungsform der vorliegenden Erfindung enthalten die erfindungsgemäßen thermoplastischen Formmassen als Komponente A Blockcopolymerisate mit Blöcken A' und B' der allgemeinen Strukturen (A-B)_{n,} A-B-A, B-A-B_{,} X[(A-B)ₙ]ₘ, X[(B-A)ₙ]ₘ, X(A-B-A)ₘ und X(B-A-B)_{m,} A'(B'-A')ₘ, B'(A'-B')ₘ, X[(A'-B')ₙB'ₚ]ₘ, X[(B'-A')ₙB'ₚ]ₘ, X[(A'-B')ₙA'_{q}]ₘ, X[(B'-A')ₙA'_{q}]ₙ, 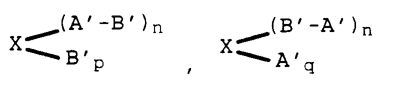 wobei A' für einen Block eines Copolymeren aus Monomeren der allgemeinen Formel I und II, B' für einen Block aus Polymeren der allgemeinen Formel II, X für den Rest eines mindestens bi-funktionellen Kopplungsmittels, n, p und q für eine ganze Zahl im Bereich von 1 bis 10 und m für eine ganze Zahl im Bereich von 2 bis 20 stehen.

Das Kopplungsmittel X reagiert nach der Polymerisation mit den lebenden anionischen Kettenenden, wodurch die vorstehend beschriebenen Strukturen entstehen. Beispiele für geeignete Kopplungsmittel sind in den US 3 985 830, 3 280 084, 3 637 554 und 4 091 053 zu finden. Nur beispielhaft seien hier epoxidierte Glyceride wie epoxidiertes Leinsamenöl oder Sojaöl genannt; geeignet ist auch Divinylbenzol. Befindet sich das lebende anionische Ende auf der Seite des B-Blocks, dann wird bevorzugt mit Verbindungen gekoppelt, die Epoxi- und/oder Estergruppen enthalten; bildet jedoch der A-Block das aktive Ende, wird bevorzugt Divinylbenzol zur Kopplung eingesetzt.

Die Blockübergänge können sowohl scharf getrennt wie auch "verschmiert" sein.

Unter "verschmiertem" Übergang versteht man ein Kettenstück des Moleküls, in dem die Monomeren des Blocks A mit dem Monomeren des Block B statistisch verteilt sind. Das angestrebte Molekulargewicht der Blöcke wird über das Verhältnis von Initiator zu Monomer eingestellt.

Als Komponente E) können die erfindungsgemäßen thermoplastischen Formmassen bis maximal 3000, vorzugsweise bis 2000 und besonders bevorzugt 100 bis 1000 ppm an Monomeren der Formel I enthalten. Vorzugsweise handelt es sich dabei um Monomere der gleichen Formel wie die bei der Polymerisation in das Copolymer eingebauten Monomeren.

Als Komponente F) können die erfindungsgemäßen thermoplastischen Formmassen bis 500, vorzugsweise bis 200 und insbesondere 20 bis 100 ppm an Monomeren der Formel II enthalten. Bevorzugt sind dies Monomere der gleichen chemischen Formel, wie sie bei der Herstellung der Komponente A) eingesetzt wurden.

Die Mengenangaben der Komponente E) und F) beziehen sich auf das Gewicht der Komponente A in den erfindungsgemäßen thermoplastischen Formmassen.

Als Komponente B) können die erfindungsgemäßen thermoplastischen Formmassen 0 bis 89,5, vorzugsweise bis zu 80 und insbesondere bis zu 70 Gew.-%, bezogen auf das Gesamtgewicht der Formmasse, an weiteren, vom Copolymer A) verschiedenen Polymeren enthalten. Grundsätzlich besteht hinsichtlich der Struktur dieser weiteren polymeren Komponenten keine besondere Beschränkung; bevorzugt werden jedoch Polymere, die zumindest einen gewissen Grad an Verträglichkeit mit der Komponente A) aufweisen, da anderenfalls die mechanischen Eigenschaften in der Regel nicht zufriedenstellend sind. Bevorzugte Polymere sind Styrolpolymere wie schlagfestes oder glasklares Polystyrol oder auch Polyphenylenether-Polymerisate, ggf. in Abmischung mit Styrolpolymeren sowie Butadien-Styrol-Blockcopolymerisate.

Die als Komponente C) enthaltenen Flammschutzmittel umfassen eine bekannte Gruppe chemischer Verbindungen. Allgemein enthalten die bedeutenden dieser Verbindungen chemische Elemente, die wegen ihrer Fähigkeit, eine Flammbeständigkeit zu verleihen, verwendet werden, wie Brom, Chlor, Antimon, Phosphor und Stickstoff.

Zu den verwendbaren halogenhaltigen Verbindungen gehören solche der folgenden Formel: 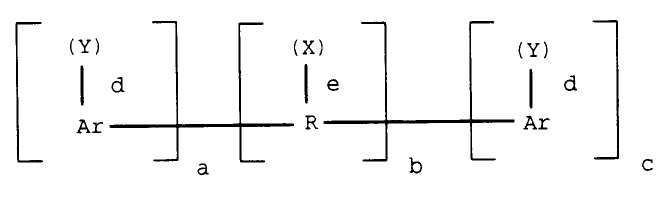 worin R C₁-C₁₀-Alkylen, C₂-C₁₂-Alkyliden oder eine cycloaliphatische Gruppe ist, wie Methylen, Ethylen, Propylen, Isopropylen, Isopropyliden, Butylen, Isobutylen, Amylen, Cyclohexylen, Cyclopentyliden, ferner kann R eine Ether-, Carbonyl-, amino- oder eine schwefelhaltige Gruppe, wie Sulfid, Sulfoxid, Sulfon, oder eine phosphorhaltige Gruppe sein. R kann auch aus zwei oder mehr Alkylen- oder Alkylidengruppen bestehen, die durch eine aromatische Amino-, Ether-, Carbonyl-, Sulfid-, Sulfoxid-, Sulfon- oder eine phosphorhaltige Gruppe miteinander verbunden sind.

Ar und Ar' sind gleiche oder verschiedene mono- oder polycarboxyclische aromatische Gruppen, wie Phenylen, Biphenylen, Terphenylen und Naphthylen.

Y ist ausgewählt aus organischen, anorganischen und organometallischen Resten. Die durch Y repräsentierten Substituenten umfassen:
1. Halogen, wie Chlor, Brom, Iod oder Fluor oder
2. Ethergruppen der allgemeinen Formel OE, wobei E ein X-ähnlicher, einwertiger Kohlenwasserstoffrest ist oder
3. einwertige Kohlenwasserstoffgruppen der durch R repräsentierten Art oder
4. andere Substituenten, wie Nitro und Cyano, wobei diese Substituenten im wesentlichen inert sind, vorausgesetzt, daß mindestens ein und vorzugsweise zwei Halogenatome pro Arylkern vorhanden sind.

X ist eine einwertige Kohlenwasserstoffgruppe, für die beispielsweise die folgenden Reste stehen können: C₁-C₁₀-Alkyl wie Methyl, Ethyl, Propyl, Isopropyl, Butyl, Decyl, Aryl wie Phenyl, Naphthyl, Biphenyl, Xylyl und Tolyl, Aralkyl wie Benzyl und Ethylphenyl, Cycloalkyl wie Cyclopentyl und Cyclohexyl, ebenso wie einwertige Kohlenwasserstoffgruppen, die inerte Substituenten aufweisen. Sind mehre Substituenten X vorhanden, können diese gleich oder verschieden sein.

Der Parameter d ist eine ganze Zahl von 1 bis zum Maximaläquivalent der ersetzbaren Wasserstoffe an den aromatischen Ringen Ar und Ar'. Der Parameter e ist eine ganze Zahl von 0 bis zu der Zahl ersetzbarer Wasserstoffe an den Substituenten R. Die Parameter a, b und c sind ganze Zahlen einschließlich 0. Wenn b nicht 0 ist können weder a noch c 0 sein. Wenn b gleich 0 ist, sind die aromatischen Gruppen durch eine direkte Kohlenwasserstoff-Kohlenwasserstoff-Bindung miteinander verbunden.

Die Substituenten Y an den aromatischen Gruppen Ar und Ar' können in Ortho-, Meta- oder Parastellung stehen.

In den Rahmen der obigen Formel fallen Biphenyle, von denen die folgenden Beispiele genannt seien:
2,2-Bis-(3,5-dichlorphenyl)propan
Bis-(2-chlorphenyl)methan
Bis-(2,6-dibromphenyl)methan
1,1-Bis-(4-iodphenyl)ethan
1,2-Bis-(2,6-dichlorphenyl)ethan
1,1-Bis-(2-chlor-4-iodphenyl)ethan
1,1-Bis-(2-chlor-4-methylphenyl)ethan
1,1-Bis-(3,5-dichlorphenyl)ethan
2,2-Bis-(3-phenyl4-bromphenyl)ethan
2,6-Bis-(4,6-dichlornahphtyl)propan
2,2-Bis-(2,6-dichlorphenyl)pentan
2,2-Bis-(3,5-dichlorphenyl)hexan
Bis-(4-chlorphenyl)phenylmethan
Bis-(3,5-dichlorphenyl cyclohexylmethan
Bis-(3-nitro-4-bromphenyl)methan
Bis-(4-hydroxy-2,6-dichlor-3-methoxyphenyl)-methan
2,2-Bis-(3,5-dichlor-4-hydroxyphenyl)propan
2,2-Bis-(3-brom-4-hydroxyphenyl)propan

Weitere unter die obige Formel fallende Verbindungen sind 2,2'-Dichlordiphenyl, 2,4'-Dichlor- oder 2,4'-Dibromdiphenyl, Hexa-, Octa- oder Decabromodiphenyle und halogenierte Diphenylether, insbesondere Octabrom- und Decabromdiphenylether.

Die Herstellung dieser und anderer anwendbarer Biphenyle ist bekannt. Anstelle der in den obigen Beispielen vorhandenen zweiwertigen aliphatischen Gruppe kann auch eine Sulfidgruppe, eine Sulfoxygruppe oder eine ähnliche andere Gruppe stehen.

Bevorzugte Phosphorverbindungen sind elementarer Phosphor oder organische Phosphorsäure, Phosphonate, Phosphinate, Phosphonite, Phosphinite, Phosphinoxyde, Phosphine, Phosphite oder Phosphate. Als Beispiele seien Triphenylphosphinoxid, Triphenylphosphat und Resorcindiphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die in der vorliegenden Erfindung verwendet werden können, sind solche der folgenden allgemeinen Formel 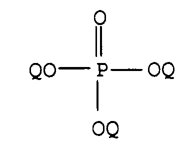 worin Q für gleiche oder verschiedene Reste steht, einschließlich Kohlenwasserstoffresten, wie Alkyl, Cycloalkyl, Aryl, alkylsubstituiertes Aryl und arylsubstituiertes Alkyl, ferner Halogen, Wasserstoff und deren Kombinationen, vorausgesetzt, daß mindestens einer der für Q stehenden Reste ein Arylrest ist. Beispiele solcher geeigneter Phosphate sind z. B. die folgenden: Phenylbisdodecylphosphat, Phenylbisneopentylphosphat, Phenylethylenhydrogenphosphat, Phenyl-bis-3,5,5'-tri-(methylhexyl-phosphat), Ethyldiphenylphosphat, 2-Ethylhexyldi(p-tolyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat, Diphenylhydrogenphosphat. Die bevorzugten Phosphate sind solche, bei denen jedes Q Aryl ist. Das am meisten bevorzugte Phosphat ist Resorcinol-bis-diphenylphosphat.

Als Flammschutzmittel sind auch solche Verbindungen geeignet, die Phosphor-Stickstoff-Bindungen enthalten, wie Phosphonitrilchlorid, Phosphorsäureesteramide, Phosphorsäureamide, Phosphonsäureamide, Phosphinsäureamide, Tris(Aziridinyl)-phosphinoxid oder Tetrakis(hydroxymethyl)-phosphoniumchlorid. Diese entflammungshemmenden Additive sind käuflich erhältlich.

Weitere halogenhaltige Flammschutzmittel sind Tetrabrombenzol, Hexachlorbenzol und Hexabrombenzol sowie halogenierte Polystyrole oder Polyphenylenether, Chlorparaffine, Tetra-, Hexa-, Octa- oder Decabromdiphenylethan sowie Octabromphenylindan, wie sie kommerziell erhältlich sind.

Auch die in der DE-A 19 46 924 beschriebenen halogenierten Phthalimide können verwendet werden. Von diesen hat insbesondere N,N'-Ethylenbistetrabromphthalimid, welches unter der Bezeichnung Saytex BT 93 im Handel erhältlich ist, Bedeutung erlangt.

Schließlich seien als Beispiele für phosphorfreie halogenhaltige Flammschutzmittel noch bromierte Oligocarbonate der allgemeinen Formel 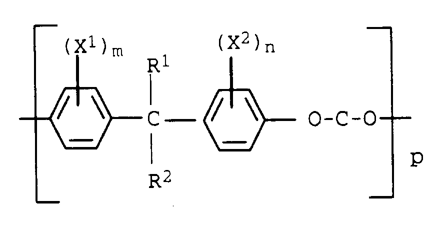 genannt, wobei
R¹ und R² ein Wasserstoffatom, eine C₁-C₄-Alkylgruppe oder eine Arylgruppe,
X¹ und X² Chlor oder Brom darstellen,
   m und n einen Wert von 1, 2, 3,oder 4 und p einen Wert im Bereich von 2 bis 20 haben.

Diese oligomeren Additive weisen auch bei Temperaturen über 2oo°C eine geringe Flüchtigkeit auf.

Die vorstehend genannten Flammschutzmittel können auch zusammen mit synergistisch wirkenden Metallverbindungen eingesetzt werden, deren Gewichtsanteil in der Regel bis zu 15, vorzugsweise bis zu 12 Gew.-% bezogen auf das Gesamtgewicht der Formmassen beträgt.

Weiterhin können die erfindungsgemäßen thermoplastischen Formmassen als Komponente D) noch bis zu 50 Gew.%, bezogen auf das Gesamtgewicht der thermoplastischen Formmasse an weiteren Zusatzstoffen und Verarbeitungshilfsmitteln enthalten. Derartige Additive sind dem Fachmann bekannt und in der Literatur beschrieben, so daß sich hier detaillierte Angaben erübrigen. Beispielhaft seien faser- und teilchenförmige Füllstoffe, Stabilisatoren gegen Wärme und UV-Licht, Entformungsmittel und Gleitmittel erwähnt. Auch eine Pigmentierung der erfindungsgemäßen Formmassen ist selbstverständlich möglich.

Die erfindungsgemäßen Formmassen zeichnen sich durch ein ausgewogenes Eigenschaftsspektrum aus und können nach bekannten Verfahren zu Formteilen jeder Art verarbeitet werden, insbesondere für Anwendungen im Elektro- und Elektronikbereich.

### Beispiele

### Reinigung von 1,1-Diphenylethylen (DPE)

Rohes DPE (Aldrich bzw. Herstellung durch Umsetzung von Phenylmagnesiumbromid mit Acetophenon, Acetylierung mit Essigsäureanhydrid und thermischer Eliminierung von Essigsäure) wird über eine Kolonne mit mindestens 50 theoretischen Böden (Drehbandkolonne; für größere Mengen Kolonne mit Sulzer-Packungen) auf 99,8 % Reinheit aufdestilliert. Das meist schwach gelbe Destillat wird über eine 20 cm-Alox-Säule (Woelm-Alumina für die Chromatographie, wasserfrei) filtriert, mit 1,5 n sec-Butyllithium bis zur kräftigen Rotfärbung titriert und über eine einfache 4 Brücke im Vakuum (1 mbar) abdestilliert. Das so erhaltene Produkt ist vollkommen farblos und kann direkt in die anionische Polymerisation eingesetzt werden.

### Polymerisation

Lösungen mit lebenden Anionen wurden grundsätzlich unter Reinststickstoff gehandhabt. Die Lösungsmittel wurden über wasserfreiem Aluminiumoxid getrocknet.

In den folgenden Beispielen steht S für Styrol und DPE für 1,1-Diphenylethylen und die Angaben in % beziehen sich auf das Gewicht, soweit nicht anders angegeben.

### Beispiel 1 - 4: Herstellung der Komponente A

### Herstellung eines statistischen S/DPE-Copolymeren mit einem S-DPE-Molverhältnis von 2:1; simultaner Zulauf von S, DPE und Cyclohexan

Ein 21-Glasreaktor mit Doppelmantel für Kühlung und Heizung und Ankerrührer wurde über mehrere Stunden mit einer refluxierenden Lösung von DPE/sec-Butyllithium in Cyclohexan inertisiert. Nach Ablassen der Reinigungslösung wurden 100 ml Cyclohexan, 100 ml eines Gemisches aus 264,24 ml (270,38 g, 1,5 mol) DPE und 344,37 ml (312,45 g, 3,0 mol) Styrol sowie 9,71 ml einer 0,5 m sec-Butyllithium-Lösung in Cyclohexan bei 25°C vorgelegt. Die Mischung färbte sich sofort rot. Der Reaktorinhalt wurde über den Heizmantel auf 70°C thermostatisiert, wobei die Farbtiefe beim Erwärmen der Lösung stark zunahm. Die verbleibenden 508,6 ml des S-DPE-Gemisches wurden über eine Spritzenpumpe innerhalb von 40 min mit konstanter Geschwindigkeit zudosiert. Parallel wurden im gleichen Zeitraum 500 ml Cyclohexan zugefahren.

7 min nach Zulaufende wurden weitere 249 ml Cyclohexan zugegeben (Polymerkonzentration 50 %). Während der Polymerisation war ein deutlicher Anstieg der Viskosität zu beobachten. Nach weiteren 15 min Nachreaktionszeit wurde mit Ethanol bis zur Farblosigkeit titriert, das Polymer durch Eintropfen der Polymerlösung in Ethanol gefällt und das abfiltrierte und mehrmals mit siedendem Ethanol gewaschene weiße Pulver 2 h bei 180°C im Vakuum (1 mbar) getrocknet.

Ausbeute: 580 g (99,5 %); flüchtige Anteile: 0,3 %; Styrolgehalt (FTIR): 54,5 % (53,6 % theor.); DPE-Gehalt (FTIR): 45,1 % (46,4 % theor.); Tg (DSC): 155°C; Breite der Glasstufe: 9°C; Molmassen (GPC, Polystyrol-Eichung, g/mol): Mn 105 000, Mw 126 000, M(Peakmaximum) 119 000.

### Beispiel 2

### Herstellung eines statistischen S/DPE-Copolymeren mit einem S-DPE-Molverhältnis von 2:1; Vorlage von DPE und Cyclohexan und Zulauf von S

Der wie in Beispiel 1 vorbereitete Reaktor wurde bei 25°C mit 749 ml Cyclohexan, 264,24 ml (270,38 g, 1,5 mol) DPE und 9,71 ml einer 0,5 m sec-Butyllithium-Lösung beschickt und auf 70°C thermostatisiert. Die ersten 300 ml Styrol wurden innerhalb von 5 min zudosiert, weitere 20 ml innerhalb von 10 min und die restlichen 24,37 ml Styrol in 15 min. Nach 15 min Nachreaktionszeit wurde wie in Beispiel 1 beschrieben aufgearbeitet.

Ausbeute: 582 g (99,8 %); flüchtige Anteile: 0,1%; Styrolgehalt (FTIR): 54,1 % (53,6 % theor.); DPE-Gehalt (FTIR): 45,5 % (46,4 % theor.); Tg (DSC): 156°C; Breite der Glasstufe: 12°C; Molmassen (GPC, Polystyrol-Eichung, g/mol): Mn 107 000, Mw 128 000, M(Peakmaximum) 120 000.

### Beispiel 3

### Herstellung eines S/DPE-S-Zweiblockcopolymeren mit einem S-DPE-Molverhältnis des S/DPE-Blocks von 1,1:1

Der wie in Beispiel 1 vorbereitete Reaktor wurde bei 25°C mit 264,24 ml (270,38 g, 1,5 mol) DPE und 14,74 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 90 min zudosiert, wobei die Zulaufgeschwindigkeit in Form eines Gradienten wie folgt beschrieben, verkleinert wurde.

| | |
|---|---|
| O - 15 min | 507,94 ml; |
| 15 - 30 min | 253,97 ml; |
| 30 - 45 min | 126,98 ml; |
| 45 - 60 min | 63,49 ml; |
| 60 - 75 min | 31,75 ml; |
| 75 - 90 min | 15,87 ml. |

Nach 15 min Nachreaktionszeit wurden innerhalb von 15 min 442,2 g Styrol und 400 ml Cyclohexan zudosiert und nach weiteren 15 min wie in Beispiel 1 beschrieben aufgearbeitet.

Ausbeute: 884 g (99,9 %); flüchtige Anteile: 0,05 %; Styrolgehalt (FTIR): 69,4 % (69,4 % theor.); DPE-Gehalt (FTIR): 30,5 % (30,6 % theor.); Tg (DSC, zwei gleichhohe Glasstufen): 171°C; Breite der Glasstufe: 15°C; 105°C; Breite der Glasstufe:16°C. Molmassen (GPC, Polystyrol-Eichung, g/mol): Mn 115 000, Mw 123 000, M(Peakmaximum) 119000.

### Beispiel 4

### Herstellung eines S/DPE-S-S/DPE-Dreiblockcopolymeren mit einem S-DPE-Molverhältnis der S/DPE-Blöcke von 1,1:1 und Kupplung mit Ethylformiat

Der wie in Beispiel 1 vorbereitete Reaktor wurde bei 25°C mit 264,24 ml (270,38 g, 1,5 mol) DPE und 29,48 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 60 min zudosiert, wobei die Zulaufgeschwindigkeit in Form eines Gradienten wie in Beispiel 3 beschrieben, verkleinert wurde. Nach 10 min Nachreaktionszeit wurden innerhalb von 15 min 442,2 g Styrol und 400 ml Cyclohexan zudosiert. Nach weiteren 15 min wurden 546 mg Ethylformiat in 2 ml Cyclohexan tropfenweise bis zur völligen Entfärbung zugegeben. Das Polymer wurde wie in Beispiel 1 beschrieben aufgearbeitet.

Ausbeute: 884 g (99,9 %); flüchtige Anteile: 0,05 %; Styrolgehalt (FTIR) : 69,4 % (69,4 % theor.) ; DPE-Gehalt (FTIR) : 30,5 % (30,6 % theor.); Tg (DSC, zwei gleichhohe Glasstufen): 169°C; Breite der Glasstufe: 17°C; 106°C; Breite der Glasstufe: 18°C. Molmassen (GPC, Polystyrol-Eichung, g/mol): Hauptpeak M(Peakmaximum) 121 000, 72 % Fläche; Nebenpeak M(Maximum) 60 000, 28 % Fläche.

### Beispiele 5 - 11 Herstellung der erfindungsgemäßen Formmassen

### Beispiel 5

94,8 Teile des nach Beispiel 1 hergestellten S/DPE-Copolymeren, 1,3 Teile medizinisches Weißöl, 1 Teil Trisnonylphenylphosphit, 2,6 Teile Hexabromcyclododecan und 0,3 Teile Tinuvin P (Ciba Geigy) wurden auf einem Extruder vom Typ ZSK 25 der Firma Werner und Pfleiderer bei 280°C vermischt und anschließend gestrangt, gekühlt und granuliert.
Vicattemperatur: 148°C

Die Vicattemperatur VST/B wurde nach DIN 53 460 gemessen.

### Beispiel 6

90 Teile des nach Beispiel 1 hergestellten S/DPE-Copolymeren, 5 Teile Triphenylphosphinoxid und 5 Teile Triphenylphosphat wurde wie in Beispiel 1a konfektioniert und aufgearbeitet.
Vicattemperatur: 132°C

### Beispiel 7

86,6 Teile des nach Beispiel 2 hergestellten S/DPE-Copolymeren wurden mit 1,5 Teilen medizinischem Weißöl, 11 Teilen Resorcinol-bis-diphenyl-phosphat, 0,6 Teilen Melamin und 0,3 Teilen Tinuvin P wie in Beispiel 1a extrudiert und aufgearbeitet.
Vicattemperatur: 146°C

### Beispiel 8

56 Teile schlagzähes Polystyrol mit einem Polybutadiengehalt von 8 %, 32 Teile des S/DPE-S-Diblockpolymeren aus Beispiel 3, 5 Teile Triphenylphosphinoxid, 5 Teile Triphenylphosphat, 1 Teil Weißöl, 0,7 Teile Melamin und 0,3 Teile Kerobit wurde wie in Beispiel 1a extrudiert und aufgearbeitet.
Vicattemperatur der flammgeschützten Mischung: 87°C

### Beispiel 9

45 Teile schlagzähes Polystyrol, 10 Teile des S/DPE-S-Diblockcopolymeren aus Beispiel 3, 6 Teile Antimontrioxid, 18 Teile Chlorparaffin, 20,5 Teile Kraton G 1652, 0,2 Teile Tinuvin P wurden wie im Beispiel 1a extrudiert und aufgearbeitet.
Vicattemperatur: 84°C

### Beispiel 10

36 Teile schlagzähes Polystyrol, 346 Teile des in Beispiel 4 hergestellten Triblockcopolmeren, 13,9 Teile Resorcinol-bis-diphenylphosphat, 3 Teile Trisnonylphenylphosphit, 0,8 Teile Melamin, 0,3 Teile Kerobit wurden wie in Beispiel 1a extrudiert und aufgearbeitet.
Vicattemperatur: 81°C

### Beispiel 11

Beispiel 4a wurde wiederholt, indem 5 Teile des schlagzähen Polystyrols durch ein Styrol-Butadien-Dreiblockcopolymer (Finaclear 520) ersetzt wurden.
Vicattemperatur: 82°C

### Beispiel 12

Beispiel 9 wurden wiederholt, indem anstelle des Chlorparaffins Octabromphenylethan (Eurobrom® 1808) eingesetzt wurde.
Vicattemperatur: 86°C

### Beispiel 13

82 Teile schlagfestes Polystyrol (PS476L), 10,4 Teile Standardpolystyrol (PS148H) der BASF Aktiengesellschaft, 5,7 Teile Decabromdiphenylethan (Saytex® 8010), 1,8 Teile Antimontrioxid und 0,2 Teile Zinkstearat wurden auf einem Extruder von Typ ZSK 25 der Firma Werner und Pfleiderer bei 270°C vermischt und anschließend gestrangt, gekühlt und granuliert.
Vicattemperatur: 92°C

## Patentansprüche

1. Flammgeschützte thermoplastische Formmassen, enthaltend als wesentliche Komponenten
A) 5 bis 99,5 Gew.% bezogen auf das Gesamtgewicht der Formmasse, Copolymerisate aus Monomeren der allgemeinen Formeln I und II 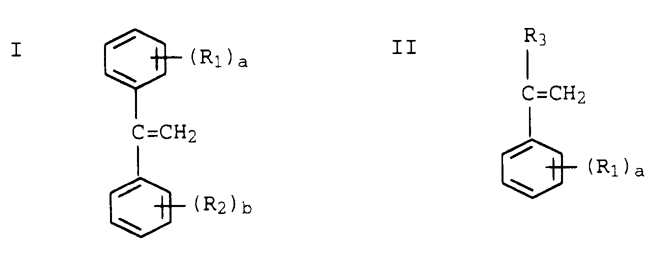 mit
R₁ = H oder Alkylrest mit 1-22 C-Atomen
R₂ = H oder Alkylrest mit 1-22 C-Atomen
R₃ = H oder Alkylrest mit 1-4 C-Atomen
a = 0, 1, 2, 3, 4 oder 5
b = 0, 1, 2, 3, 4 oder 5
B) 0 bis 89,5 Gew.%, bezogen auf das Gesamtgewicht der Formmasse, weiteren von A) verschiedenen Polymeren, und
C) 0,5 - 20 Gew.-%, bezogen auf das Gesamtgewicht der Formmasse, eines Flammschutzmittels
D) 0 bis 50 Gew.%, bezogen auf das Gesamtgewicht der Formmasse, an weiteren Zusatzstoffen und Verarbeitungshilfsmitteln.

2. Flammgeschützte thermoplastische Formmassen nach Anspruch 1 enthaltend als Komponente A ein Copolymer aus 1,1,-Diphenylethylen und Styrol.

3. Flammgeschützte thermoplastische Formmassen nach einem der Ansprüche 1 - 2, enthaltend als Komponente A Blockcopolymerisate mit den Blöcken A' und B' der folgenden allgemeinen Struktur
(A'-B')ₙ
A'-B'-A', A'-(B'-A)ₘ
B'-A'-B', B'-(A'-B')ₘ
X[(A'-B')ₙ]ₘ, X[(B'-A')ₙ]ₘ, X[(A'-B'-A')ₙ]ₘ oder
X[(B'-A'-B')ₙ]ₘ, X[(A'-B')ₙB'ₚ]ₘ, X[(B'-A')ₙB'ₚ]ₘ,
X[(A'-B')ₙ A'_{q}]ₘ, X[(B'-A')ₙA'_{q}]ₘ, 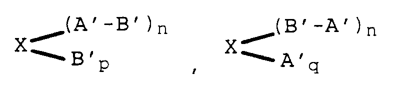
wobei
A' für einen Block aus Copolymeren aus Monomeren der allgemeinen Formeln I und II,
B' für einen Block aus Monomeren der allgemeinen Formel II,
X für den Rest eines mindestens bi-funktionellen Kopplungsmittels,
n, p und q für eine ganze Zahl im Bereich von 1 bis 10 und
m für eine ganze Zahl im Bereich von 2 bis 20
stehen.
